# EUROPEAN PATENT APPLICATION

(11) **EP 2 570 828 A1**
(43) Date of publication of application: **20.03.2013**
(21) Application number: 12173861.1
(22) Date of filing: 27.06.2012
(51) Int. Cl.: G02B 6/00

(54) **Display apparatus with a backlight unit for decreasing variations in brightness**

(30) Priority: 19.09.2011 KR 20110093862
(71) Applicant: Samsung Electronics Co., Ltd., Suwon-si, Gyeonggi-do, 443-742 (KR)
(72) Inventor: Jung, Hyun-jun, Gyeonggi-do (KR)
(74) Representative: Hewett, Jonathan Michael Richard

(57) **Abstract**

A display apparatus for decreasing variations in brightness is disclosed. The display apparatus includes: a cover; a display panel accommodated in the cover; a light source unit disposed along at least one side wall on one edge from among side walls on four edges of the cover at the rear of the display panel and radiating light in a direction parallel with a plane surface of the display panel; a rear sheet disposed at the rear of the display panel which faces the display panel and reflects the radiated light to provide to the display panel. At least one side sheet is disposed along a side wall on a different edge from among the sides walls on the four edges of the cover, to stand upright to the rear sheet and totally reflecting the radiated light.

## Description

The present invention relates to a display apparatus which includes a display panel for displaying images and a backlight unit for providing light to the display panel. More particularly, the display apparatus decreases variations in brightness of images displayed on a display panel.

Unlike an image processing apparatus, such as a set-top box, a display apparatus, such as a TV and a monitor, has a display panel which presents broadcasting signals or image data in various formats, as display images. A display panel is configured in various forms, for example, a liquid crystal display (LCD) panel and a plasma display panel (PDP), and is applicable to different kinds of display apparatuses. If a panel does not generate light by itself, like an LCD panel, a display apparatus has a backlight unit that generates and provides light to the panel.

A backlight unit of a display apparatus provides light generated by a light source, such as a cold cathode fluorescent lamp (CCFL) or light emitting diodes (LEDs), to a display panel via uniformalization or regulation through a light guide plate.

However, it is not easy to make such conventional display apparatus due to the weight of the light guide plate. Further, in the conventional display apparatus, optical patterns are formed on a rear side of the light guide plate for the uniformity of light, making it complicated to design the light guide plate. That is, the light guide plate of the conventional display apparatus occupies a large percentage in terms of weight and manufacturing costs as compared with other components of the display apparatus.

The foregoing and/or other aspects of the present invention may be achieved by providing a display apparatus including: a cover; a display panel accommodated in the cover; a light source unit disposed along at least one side wall on one edge from among sides walls on four edges of the cover at the rear of the display panel, and radiating light in a direction parallel with a plane surface of the display panel; a rear sheet disposed at the rear of the display panel to face the display panel and reflecting the radiated light to provide the radiated light to the display panel; and at least one side sheet disposed along a side wall on a different edge from among the sides walls on the four edges of the cover, to stand upright to the rear sheet and totally reflecting the radiated light.

The rear sheet may diffusely reflect the radiated light from the light source unit and the reflected light from the side sheet.

The side sheet has a reflecting side facing toward the light radiating direction of the light source unit from among the at least one side sheet may be disposed to stand and incline at a preset angle towards the rear sheet, so that the reflected light is guided to the rear sheet.

The side sheet having a reflecting side parallel with the light radiating direction of the light source unit, from among the at least one side sheet may be disposed to stand substantially upright to the rear sheet so that the reflected light is directed to a central region of the display apparatus.

The light source unit may be disposed along a first side wall from among the side walls on the four edges, and the at least one side sheet may include a first side sheet which is disposed on a second side wall facing the first side wall, from among the side walls on the four edges and stands to incline at a preset angle towards the rear sheet so that the reflected light is directed to the rear sheet.

The at least one side sheet may further include a second side sheet installed on a third side wall from among the side walls on the four edges, which is perpendicular to the first side wall and the second side wall; and a third side sheet installed on a fourth side wall facing the third side wall, from among the side walls on the four edges, and the second side sheet and the third side sheet stand substantially perpendicular to the rear sheet so that the reflected light is directed to a central region of the display apparatus.

The light source unit may be disposed along each of a first side wall and a second side wall, which face each other, from among the side walls on the four edges, the at least one side sheet may include a first side sheet installed along a third side wall which is perpendicular to the first side wall and the second side wall, from among the side walls on the four edges; and a second side sheet installed along a fourth side wall facing the third side wall, and the first side sheet and the second side sheet are disposed substantially perpendicular to the rear sheet.

The rear sheet may include a plane surface which is parallel with the display panel.

The light source unit may include a plurality of light emitting elements disposed along at least one edge of the four edges of the cover and a lens extending parallel with a disposed direction of the light emitting elements and disposed in a radiating direction of the light emitting elements so that incident light from the light emitting elements is collected to exit.

The lens may include a collimator lens.

The display apparatus may further include an image receiver receiving an image signal and an image processor processing the image signal received by the image receiver to display as an image on the display panel.

The display apparatus may further include a cover; a display panel accommodated in the cover; a light source unit disposed along at least one side wall on one edge from among sides walls on four edges of the cover at the rear of the display panel and radiating light in a direction parallel with a plane surface of the display panel; a rear sheet disposed at a rear of the display panel facing towards the display panel and reflecting the radiated light to provide to the display panel; and a side sheet having a reflecting side facing toward the light radiating direction of the light source unit, wherein the side sheet is disposed to stand and incline at a preset angle towards the rear sheet so that the reflected light is guided to the rear sheet.

The above and/or other aspects will become apparent and more readily appreciated from the following description of the exemplary embodiments, taken in conjunction with the accompanying drawings, in which:
FIG. 1 is an exploded perspective view of a display apparatus according to a first exemplary embodiment.
FIG. 2 is a plan view illustrating arrangement of a light source module, a lens, a side sheet and a rear sheet in the display apparatus in FIG. 1.
FIG. 3 is a perspective view illustrating a main part of the display apparatus, taken along line I-II of FIG. 2.
FIG. 4 is a graph illustrating a brightness change according to different parts of the display apparatus, taken along line I-II, being compared with that of a display apparatus having a different configuration.
FIG. 5 is a perspective view illustrating a main part taken along line III-IV in the display apparatus of FIG. 2.
FIG. 6 is a plan view illustrating arrangement of a light source module, a lens, a side sheet and a rear sheet in a display apparatus according to a secondary exemplary embodiment.
FIG. 7 is a block diagram illustrating a configuration of a display apparatus according to a third exemplary embodiment.

Below, exemplary embodiments will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity and conciseness, and like reference numerals refer to like elements throughout.

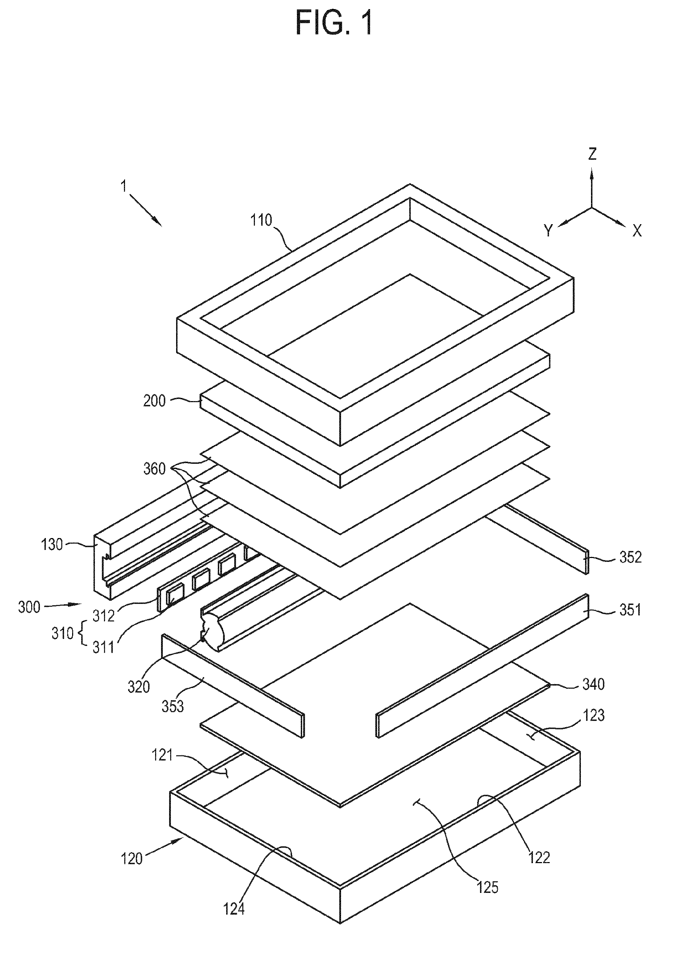

FIG. 1 is an exploded perspective view of a display apparatus 1 according to a first exemplary embodiment.

Directions shown in the drawings are defined as follows. X, Y, and Z directions indicate width, length, and height directions, respectively. In the drawings, a display panel 200 is disposed on an X-Y plane, and the display panel 200 and a backlight unit 300 are stacked in a Z direction. Here, opposite X, Y, and Z directions are expressed as -X, -Y, and -Z directions, respectively, and the X-Y plane means a plane defined by an X-axis and a Y-axis. The drawings and embodiments will be described on the basis of the foregoing definition of the directions.

As shown in FIG. 1, the display apparatus 1 according to the present embodiment includes covers 110 and 120 forming an accommodation space and an outward shape, the display panel 200 accommodated in the covers 110 and 120 and having an image display surface on which images are displayed, and the backlight unit 300 accommodated in the covers 110 and 120 and providing light to the display panel 200 such that images are displayed on the display panel 200.

In addition, the display apparatus 1 further includes a driving board (not shown) which drives the display panel 200 and an image processing board (not shown) which processes image signals and controls the display panel 200 and the backlight unit 300, corresponding to processing results. However, it should be noted that these components are not directly associated with the present exemplary embodiment and descriptions thereof are omitted in the present exemplary embodiment in order to clarify the scope of the present invention.

The covers 110 and 120 accommodate overall components of the display apparatus 1 therein and cover all four edges of a front side of the display panel 200 and a rear side of the display panel 200. When a side of the display panel 200 on which images are displayed is defined as a front side and an opposite side thereof is defined as a rear side or back side, the covers 110 and 120 include a front cover 110 and a rear cover 120 which respectively cover the front side of the display panel 200 and a back side of the backlight unit 300.

The front cover 110 has an opening on a plane facing the display panel 200 and parallel with the X-Y plane to expose the image display surface of the display panel 200 in the Z direction. The front cover 110 supports all four edge regions of the accommodated display panel 200.

The rear cover 120 includes a rear wall 125 facing the rear side of the display panel 200 and parallel with the X-Y plane and side walls 121, 122, 123 and 124 extending from four edges of the rear wall 125 and standing substantially upright with respect to the rear wall 125.

The rear wall 125 supports a rear sheet 340 on a plane in the Z direction.

The side walls 121, 122, 123 and 124 are respectively disposed on four sides positioned in -X, X, -Y and Y directions with respect to the centre of the display panel 200 and extend from the rear wall 125 in the Z direction, standing substantially upright. Due to the side walls 121, 122, 123 and 124, the display panel 200 and the backlight unit 300 are supported so as not to stray in a direction parallel with the X-Y plane in the display apparatus 1 when assembling the display apparatus 1.

The display panel 200 is configured as a liquid crystal display (LCD) panel in the present exemplary embodiment. The display panel 200 is formed of two substrates (not shown) and a liquid crystal layer (not shown) interposed therebetween and displays images by adjusting alignment of liquid crystals in the liquid crystal layer (not shown) through the application of driving signals. The display panel 200 does not emit light by itself and thus is provided with light from the backlight unit 300 in order to display images.

When a driving signal is applied from the driving board (not shown), the liquid crystals (not shown) of the display panel 200 rotate at a predetermined angle. Accordingly, light transmitting characteristics vary among respective cell units constituting an image display region of the display panel 200, thereby displaying images on the image display surface.

The backlight unit 300 is disposed at the rear/back of the display panel 200 and generates and provides light to the rear side of the display panel 200. The backlight unit 300 includes a light source unit 310 and 320 generating and radiating light, the rear sheet 340 disposed at the rear of the display panel 200 and reflecting light radiated from the light source unit 310 and 320 to the display panel 200, at least one side sheet 351, 352 and 353 disposed along each of the side walls 121, 122, 123 and 124 of the rear cover 120, standing upright to the rear sheet 340, and reflecting light radiated from the light source unit 310 and 320, and optical sheets 360 stacked on the rear side of the display panel 200 and adjusting characteristics of reflected light from the rear sheet 340 to transmit to the display panel 200.

Here, the light source unit 310 and 320 includes a light source module 310 disposed at one of the four edges of the display apparatus 1 and generating and radiating light and a lens 320 extending along the light source module 310 and collecting and projecting light radiated from the light source module 310.

Further, a holder 130 supporting the light source module 310 and the lens 320 may be disposed between the front cover 110 and the rear cover 120. The holder 130 extends along the side wall 121 of the rear cover 120.

According to the present exemplary embodiment, the light source module 310 and the lens 320 are installed in the edge region extending in the Y direction and offset in the - X direction with respect to the centre of the display panel 200 (referred to hereafter as an "edge region in the X direction" - the same convention will be used hereafter to refer to edges in the -X, Y and -Y directions, with reference to their offset directions, each edge extending perpendicularly to its offset directions), from among the four edge regions of the covers 110 and 120, that is, along the side wall 121 of the rear cover 120, without being limited thereto. The light source module 310 and the lens 320 may be installed on any one of the side walls 122, 123 and 124 of the rear cover 120.

The light source module 310 includes a plurality of light emitting elements 311 sequentially disposed in series in the Y direction and a module substrate 312 which extends along the light emitting elements 311 and the light emitting elements 311 are mounted on substrate 312 for operation.

The light emitting elements 311 are configured as light emitting diodes (LEDs) and provided with driving power and operation control signals from the module substrate 312. The light emitting elements 311 are capable of adjusting a light radiating direction according to a style in which the light emitting elements 311 are mounted on the module substrate 312. According to the present exemplary embodiment, a side of the module substrate 312 on which the light emitting elements 311 are mounted stands upright to the X-Y plane parallel with the image display surface of the display panel 200 and faces the X direction. The light emitting elements 311 are mounted on the module substrate 312 such that the light radiating direction is the X direction.

A plurality of light emitting elements 311 are mounted on a single module substrate 312_{.} The light emitting elements 311 mounted on the single module substrate 312 may include blue LEDs, green LEDs and red LEDs, from which blue light, green light and red light are emitted are mixed into white light having excellent color reproducibility. However, this configuration is only an illustrative example, and the light emitting elements 311 may include white LEDs which themselves generate white light.

The module substrate 312 is formed by printing a circuit designed for operation of the light emitting elements 311 on a substrate having a narrow width and extending lengthwise in the Y direction. The module substrate 312 may have a component thereon to enable the module substrate 312 to be combined with the holder 130, for example, a hole (not shown) to be coupled to a screw (not shown). The module substrate 312 is not limited as to materials but may include aluminium materials having excellent heat transfer performance in view of the discharge of heat from the light emitting elements 311. The holder 130 may include the same material as that of the module substrate 312.

The lens 320 is disposed adjacently to the light source module 310 in the light radiating direction of the light emitting elements 311 so that light from the light emitting elements 311 is incident thereto. The lens 320 extends in the Y direction along the arranged light emitting elements 311. The lens 3120 collects light from the light emitting elements 311 and radiates the light to a central region of the display apparatus 1 in the X direction. The lens 320 employs a collimator lens.

The lens 320 may be designed in various shapes depending on light characteristics required by the display apparatus 1. Further, the lens 320 includes plastics, such as polymethyl methacrylate (PMMA), or resins and is manufactured by extrusion molding in the present exemplary embodiment.

When the lens 320 is manufactured by extrusion molding, the cross-sectional shape of the lens 320 perpendicular to a direction of lateral extension of the lens 320, that is, the "lengthwise" direction, is the same in each lengthwise direction. That is, when the lens 320 is cut in any direction parallel with the X-Z plane, respective cross sections have the same shape.

The rear sheet 340 is supported by the rear wall 125 and includes a reflecting side facing the rear side of the display panel 200. The rear sheet 340 according to the present embodiment includes a surface parallel with the X-Y plane in the same manner as the display panel 200 and the rear wall 125. The rear sheet 340 has a diffuse reflection property so as to uniformly transmit exiting light from the lens 320 and reflected light from the side sheets 351, 352 and 353 to the display panel 200.

The side sheets 351, 352 and 353 are installed on other side walls 122, 123 and 124 than the side wall 121 on which the light source module 310 and the lens 320 are disposed from among the sides walls 121, 122, 123 and 124 of the four edges of the rear cover 120. The side sheets 351, 352 and 353 reflect exiting light from the lens 320 to the central region of the display apparatus 1 or to the rear sheets 340 based on disposed positions thereof. Here, the side sheets 351, 352 and 353 have total reflection properties, whereas the rear sheet 340 has diffuse reflection property.

At least one optical sheet 360 may be stacked on the rear side of the display panel 200 parallel with the display panel 200. The optical sheet 360 includes a prism sheet, a diffusion sheet, a protection sheet, and the like, and adjusts characteristics of light reflected from the rear sheet 340 to transmit to the display panel 200.

Hereinafter, the rear sheet 340 and the side sheets 351, 352 and 353 according to the present exemplary embodiment are described in detail.

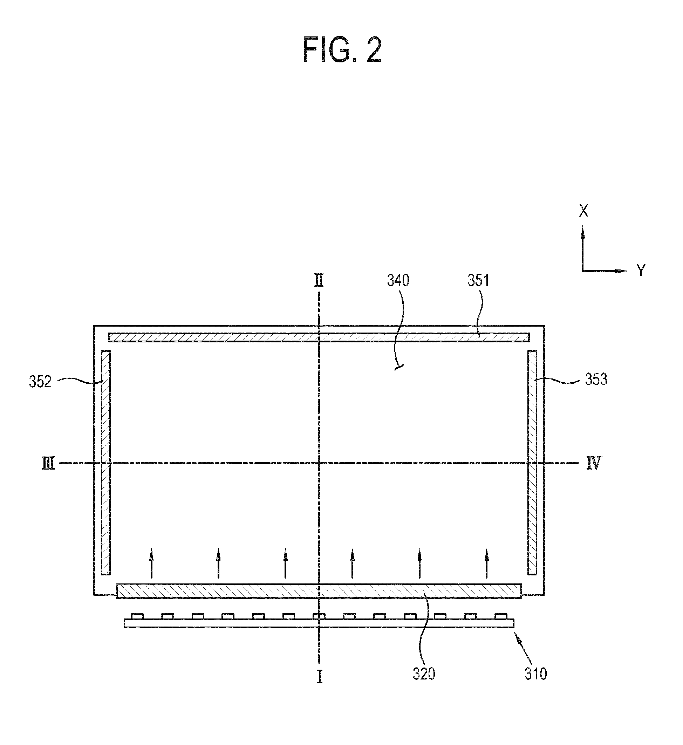

FIG. 2 is a plan view illustrating an arrangement of the light source module 310, the lens 320, the side sheets 351, 352 and 353, and the rear sheet 340 in the display apparatus 1.

As shown in FIG. 2, the light source module 310 and the lens 320 are disposed in the edge region in the -X direction among the four edge regions of the display apparatus 1, the edge arranged with respect to the rear sheet 340 having the reflecting side parallel with the X-Y plane. Light is radiated from the light source module 310 and the lens 320 in the X direction.

The side sheets 351, 352 and 353 are disposed in the other edge regions in X, -Y and Y directions on which the light source module 310 and the lens 320 are not disposed, from among the four edge regions of the display apparatus 1. The side sheets 351, 352 and 353 stand upright to the rear sheet 340.

The plurality of side sheets 351, 352 and 353 include a first side sheet 351 having a reflecting side facing the light source module 310 and the lens 320 in the light radiating direction, a second side sheet 352 disposed perpendicular to the first side sheet 351 and having a reflecting side parallel with the light radiating direction, and a third side sheet 353 having a reflecting side facing the second side sheet 352.

With this configuration, part of the light radiated from the light source module 310 and the lens 320 is totally reflected by the side sheets 351,352 and 353 and the other part of light is diffuse-reflected by the rear sheet 340. Then, the totally reflected light by the side sheets 351, 352 and 353 first is secondarily diffuse-reflected by the rear sheet 340. Accordingly, the radiated light is reflected to the display panel 200.

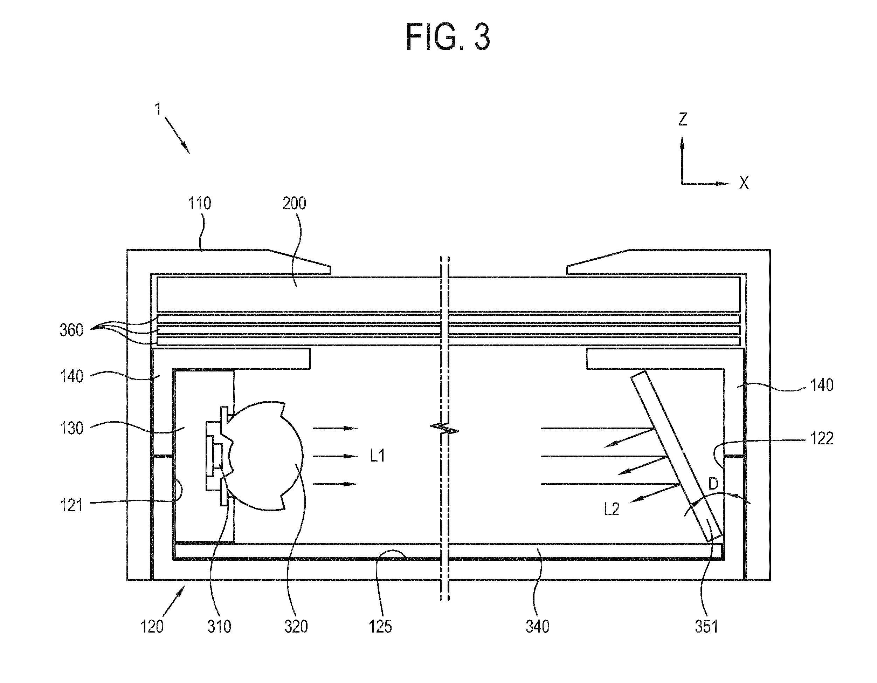

In order to secure visibility of images displayed on the display panel 200, the entire region of the display panel 200 is required to exhibit uniform brightness, or the central region of the display panel 200 is required to have a relatively higher brightness than edge region regions. To this end, the side sheets 351, 352 and 353 are disposed as follows, which will be described with reference to FIGs. 3 to 5.

FIG. 3 is a perspective view illustrating a main part of the display apparatus 1, taken along line I-II of FIG. 2.

As shown in FIG. 3, the display panel 200 and the optical sheets 360 are stacked on the top in the Z direction in the accommodation space formed by the front cover 110 and the rear cover 120. Here, the display apparatus 1 may include a panel supporting frame 140 supporting the display panel 200 and the optical sheets 360.

The holder 130 is disposed between the panel supporting frame 140 and the rear cover 120, particularly along the side wall 121. The holder 130 supports the light source module 310 and the lens 320 so they stand upright along an axis in the Z direction.

The rear sheet 340 is disposed on the rear wall 125 such that the reflecting side faces the Z direction.

The first side sheet 351 is disposed along the side wall 122 of the rear cover 120 facing to the light radiating direction from the light source module 310 and the lens 320. Here, the first side sheet 351 is installed to stand up from the rear sheet 340, inclining towards the rear sheet 340 at a predetermined angle. The first side sheet 351 slants toward the side wall 122 at a preset angle D.

The reason why the first side sheet 351 slants is explained as follows. If exiting light L1 from the lens 320 is reflected by the first side sheet 351, reflected light L2 heads to the rear sheet 340. Light reflected by the rear sheet 340 is diffusely reflected by the rear sheet 340 and heads in the Z direction.

In the present exemplary embodiment, the light source module 310 is disposed in the edge region in the -X direction of the display apparatus 1. Thus, in comparison, the amount of light in the edge region in the -X direction is relatively greater than the amount of light in the edge region in the X direction, which means that the amount of light reflected by the rear sheet 340 in an adjacent area to the edge region in the X-direction of the display apparatus 1 is relatively small, and brightness in the area adjacent to the edge region in the X direction is relatively inferior across the entire display panel 200.

Thus, in the present exemplary embodiment, the first side sheet 351 having the reflecting side facing toward the light radiating direction from the light source module 310 and the lens 320, is disposed to slant at an angle D. Accordingly, reflected light on the first side sheet 351 is guided toward the rear sheet 340, in more detail, as described above, towards the area adjacent to the X-direction edge region in which the amount of light is relatively small. The rear sheet 340 diffusely reflects the reflected light to the display panel 200, thereby reducing variations in overall brightness of the display panel 200.

The first side sheet 351 has total-reflection characteristic, unlike the rear sheet 340. This is why if the first side sheet 351 has diffuse-reflection characteristic instead of total-reflection characteristic, the brightness may drastically increase relatively in the edge region in which the first side sheet 351 is disposed. Also, in this case, the amount of light transmitted from the first side sheet 351 to the rear sheet 340 decreases relatively, making it difficult to reduce variations in overall brightness of the display panel 200.

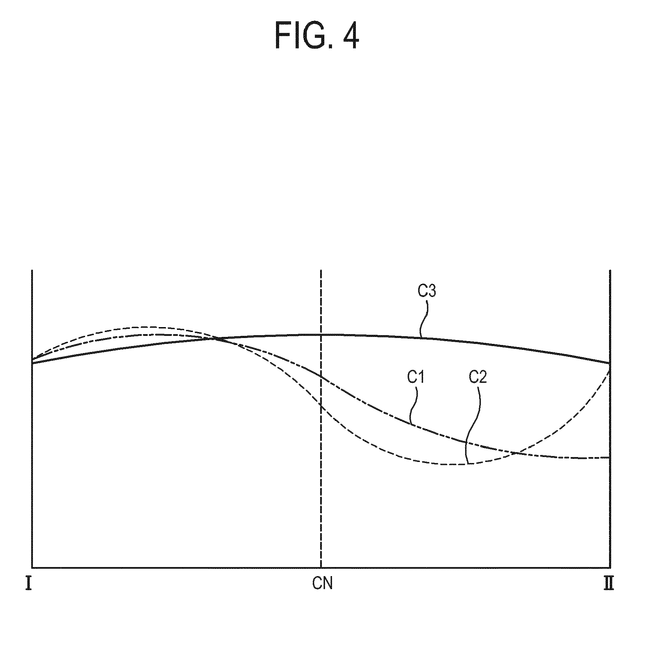

FIG. 4 is a graph illustrating a brightness change according to different parts of the display apparatus 1, taken along line I-II, compared with that of a display apparatus having a different configuration.

In FIG. 4, the horizontal axis represents different parts of the display apparatus 1taken along line I-II. That is, the leftmost horizontal axis refers to the edge region in which the light source module 310 and the lens 320 are disposed, and the rightmost refers to the edge region in which the first side sheet 351 is disposed. The vertical axis represents brightness.

It should be noted that the graph is provided only for comparison of change patterns of curves and thus does not specify values and units.

Each curve on the graph can be explained as follows. Curve C1 illustrates a case where the first side sheet 351 is absent in the display apparatus of FIG. 3. Curve C2 illustrates a case where the first side sheet 351 is disposed to stand substantially upright to the rear sheet 340, that is, the angle D is actually 0, in the display apparatus of FIG. 3. Curve C3 illustrates a case where the present exemplary embodiment is applied, that is, the display apparatus 3 is configured as shown in FIG. 3.

On Curve C1, brightness is high on the left side of the graph, where the light source module 310 is disposed, and gradually decreases towards the right side. On Curve C₁, brightness drastically decreases over the central region CN of the display apparatus 1 and is the lowest on the rightmost side. This explains why due to the absence of the first side sheet 351, the amount of light drastically decreases as distance from the light source module 310 increases.

On Curve C2, brightness is high on the left side of the graph, is the lowest between the central region CN and the rightmost, and drastically increases on the rightmost of the graph. This explains that the reflecting side of the first side sheet 351 faces straight to the light radiating direction, and thus the amount of light increases in the edge region where the first side sheet 351 is disposed.

On Curve C3, brightness is even overall from the left side to the right side of the graph and is relatively high in detail in the central region CN. This is because, as described above, light reflected on the first side sheet 351 is guided to the rear sheet 340, and thus light is diffusely reflected in an overall even manner in the display apparatus 1.

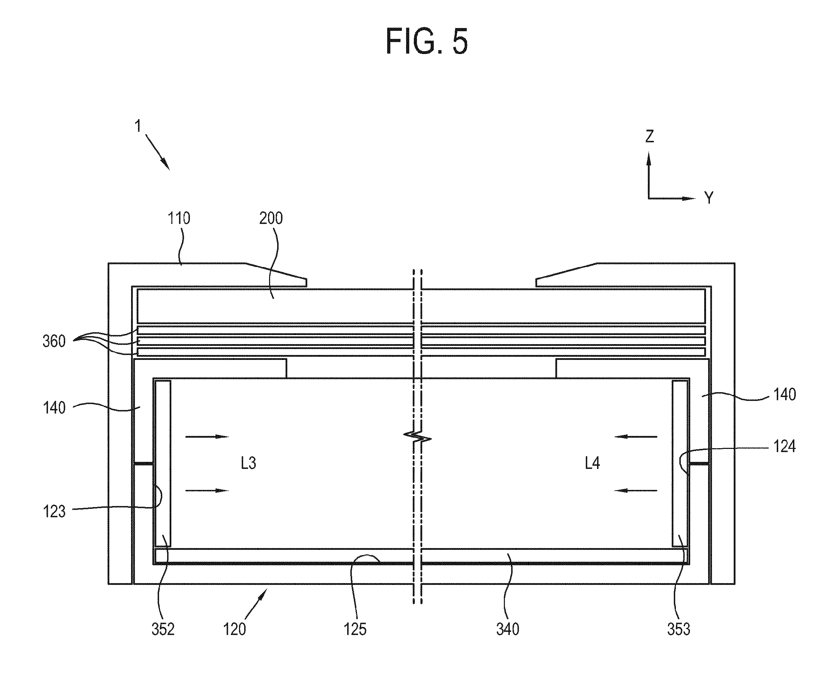

FIG. 5 is a perspective view illustrating a main part of the display apparatus 1, taken along line III-IV of FIG. 2.

As shown in FIG. 5, the second side sheet 352 and the third side sheet 353, from among the side sheets 351,352 and 353 are disposed in the edge regions in the -Y and Y directions of the display apparatus 1, respectively, such that the respective reflecting sides face to each other. The second side sheet 352 is disposed along the side wall 123 of the rear cover 120, and the third side sheet 353 is disposed along the side wall 124 of the rear cover 120.

Here, the second side sheet 352 and the third side sheet 353 are disposed to stand substantially upright to the reflecting side of the rear sheet 340. Accordingly, light L₃ and L4 totally reflected on the second side sheet 352 and the third side sheet 353, respectively, may be guided to the central region of the display apparatus 1.

The respective reflecting sides of the second side sheet 352 and the third side sheet 353 are parallel with the light radiating direction of the light source module 310. Thus, even if the reflecting sides stand upright unlike the first side sheet 351, brightness does not increase in the edge regions in the -Y and Y directions of the display apparatus 1.

By using the plurality of side sheets 351, 352 and 353, the display apparatus 1 according to the present exemplary embodiment may enable the display panel 200 to have uniform overall brightness.

In the present exemplary embodiment, the light source unit 310 and lens unit 320 is installed on only one edge region of the display apparatus 1. However, if a screen is 40 inches or more as measured diagonally, light source units 410, 420, 430 and 440 may be installed on a plurality of edge regions of a display apparatus 3, in view of the desired amount of light.

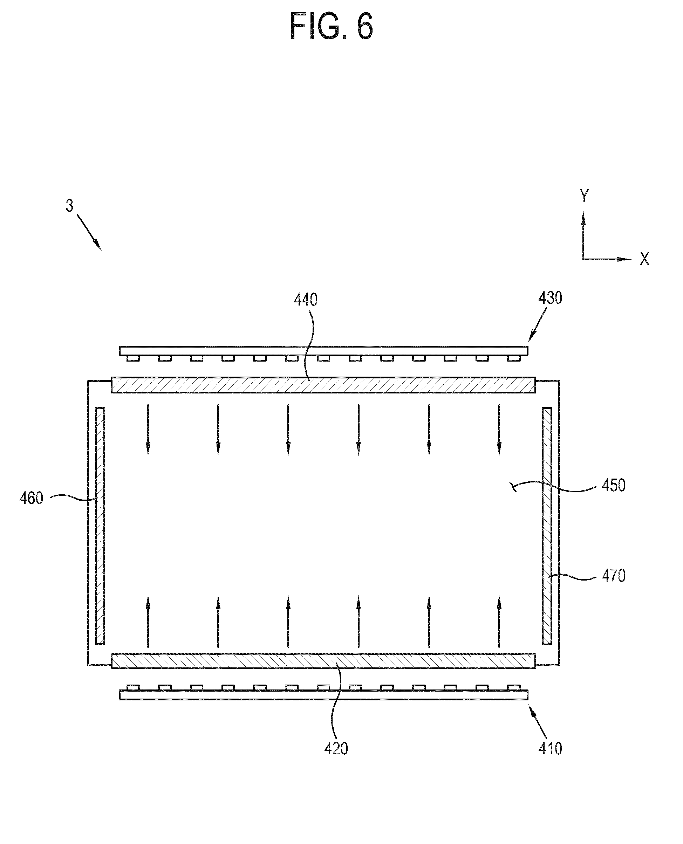

FIG. 6 is a plan view illustrating arrangement of light source modules 410 and 430, lenses 420 and 440, side sheets 460 and 460, and a rear sheet 450 in a display apparatus 3, according to a second exemplary embodiment.

The display apparatus 3 according to the present exemplary embodiment has substantially the same configuration as the display apparatus according to the first exemplary embodiment shown in FIG. 1, with the exception that a light source unit 410 and 420 is disposed instead of the first side sheet 351 in the position of the first side sheet 351. Thus, FIG. 6 shows only some components of the display apparatus 3 directly associated with the present exemplary embodiment for concise and clear description of the present exemplary embodiment.

As shown in FIG. 6, from among four edge regions of the display apparatus 3, a first light source module 410 and a first lens 420 are disposed in an edge region in the -Y direction, a second light source module 430 and a second lens 440 are disposed in an edge region in the Y direction, a first side sheet 460 is disposed in an edge region in the -X direction, and a second side sheet 470 is disposed in an edge region in the X direction. These respective components stand upright to the rear sheet 450.

Here, the first side sheet 460 and the second side sheet 470 are disposed, standing substantially upright to the rear sheet 450.

The above described components have substantially the same functions as those in the first exemplary embodiment, and thus descriptions thereof are omitted.

In the present exemplary embodiment, a light radiating direction from the first light source module 410 faces a light radiating direction from the second light source module 420, and thus radiated lights are collected in a central region of the display apparatus 3. Further, since respective reflecting sides of the first side sheet 460 and the second side sheet 470 face toward each other, light reflected on the sides sheets 460 and 470 are also collected in the central region of the display apparatus 3.

The configuration shown in FIG. 6 is generally applied when the display panel 200 is a large-sized screen. Thus, if the first side sheet 460 and the second side sheet 470 are absent, brightness may have a relative decrease in the central region. According to the present exemplary embodiment, reflected light on the first side sheet 460 and the second side sheet 470 is guided to the central region and then diffusely reflected by the rear sheet 450, thereby further increasing brightness in the central region.

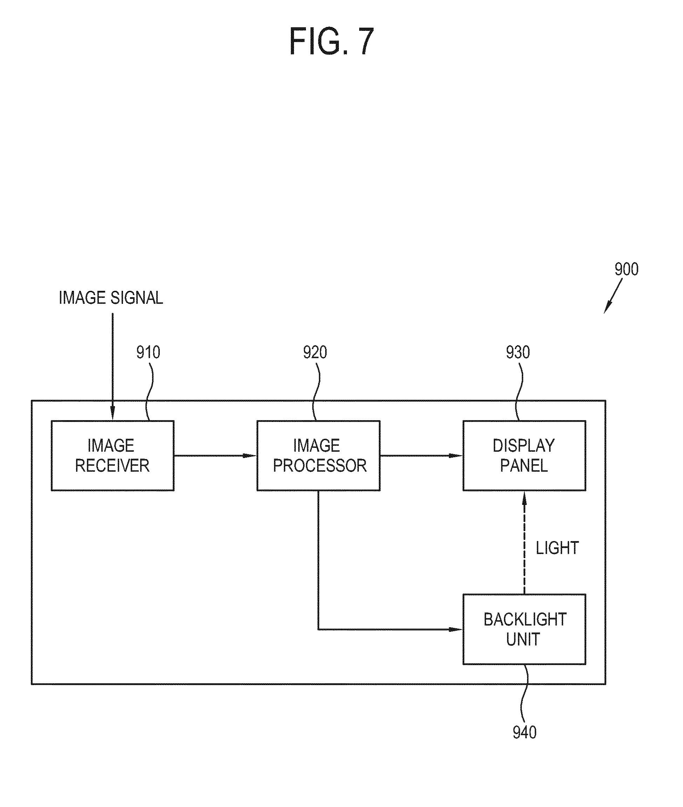

The present embodiment may be applied to a display apparatus 900 configured in various types. Hereinafter, when the display apparatus 900 is configured as a TV, an illustrative application of the present exemplary embodiment is described with reference to FIG. 7.

FIG. 7 is a block diagram illustrating a configuration of a display apparatus 900 according to a third exemplary embodiment. In FIG. 7, a solid line indicates transmission of an image signal or control signal, and a dotted line indicates transmission of light.

As shown in FIG. 7, the display apparatus 900 according to the present exemplary embodiment includes an image receiver 910 receiving image signals from the outside, an image processor 920 processing image signals received by the image receiver 910, a display panel 930 displaying images based on image signals processed by the image processor 920, and a backlight unit 940 providing light so that images are displayed on the display panel 930.

The image receiver 910 receives image signals/image data through a wire or wirelessly and transmits the image signals/image data to the image processor 920. The image receiver 910 may be configured in various ways which correspond to standards of received image signals. For example, the image receiver 910 may receive radio frequency (RF) signals or image signals according to composite/component video, super video, SCART, and high definition multimedia interface (HDMI), DisplayPort, unified display interface (UDI), or wireless HD standards, and the like.

The image processor 920 performs various preset image processing processes on image signals and outputs the processed image signals to the display panel 930, so that images are displayed in a display region of the display panel 930. For example, the image processor 920 may perform, without being limited to, decoding which corresponds to various image formats, de-interlacing, frame refresh rate conversion, scaling, noise reduction to improve image quality, detail enhancement, and the like.

The image receiver 910 and the image processor 920 may be configured as image processing boards (not shown) embedded in the display apparatus 900.

The display panel 930 and the backlight unit 940 have substantially the same configurations as those in the foregoing embodiments, and thus descriptions thereof are omitted.

Although a few exemplary embodiments have been shown and described, it will be appreciated by those skilled in the art that changes may be made in these exemplary embodiments without departing from the invention, the scope of which is defined in the appended claims.

## Claims

1. A display apparatus comprising:
a cover;
a display panel accommodated in the cover;
a light source unit disposed along a side wall on a first edge from among sides walls on four edges of the cover at the rear of the display panel and arranged to radiate light in a direction parallel with a plane surface of the display panel;
a rear sheet disposed at the rear of the display panel facing towards the display panel and arranged to reflect the radiated light to provide light to the display panel; and
a first side sheet disposed along a side wall on a second edge different from the first edge from among the sides walls on the four edges of the cover to stand upright to the rear sheet and arranged to totally reflect the radiated light.

2. The display apparatus of claim 1, wherein the rear sheet is arranged to diffusely reflect the radiated light from the light source unit and the light reflected from the first side sheet.

3. The display apparatus of claim 2, wherein the first side sheet has a reflecting side facing toward the light radiating direction of the light source unit and the reflecting side is disposed to stand and incline at a preset angle towards the rear sheet so that the reflected light is guided to the rear sheet.

4. The display apparatus of claim 2, wherein the first side sheet has a reflecting side parallel with the light radiating direction of the light source unit and the reflecting side is disposed to stand substantially upright to the rear sheet so that the reflected light is directed toward a central region of the display apparatus.

5. The display apparatus of claim 2, wherein the first side sheet is disposed on a second side wall facing toward the first side wall from among the side walls on the four edges and stands at an incline at a preset angle towards the rear sheet so that the reflected light is directed toward the rear sheet.

6. The display apparatus of claim 5, further comprising a second side sheet installed on a third side wall from among the side walls on the four edges, which is perpendicular to the first side wall and the second side wall; and a third side sheet installed on a fourth side wall facing the third side wall from among the side walls on the four edges, and the second side sheet and the third side sheet stand substantially perpendicular to the rear sheet so that the reflected light is directed toward a central region of the display apparatus.

7. The display apparatus of claim 2, wherein the light source unit is further disposed along a second side wall, which faces the first side wall, from among the side walls on the four edges, the first side sheet is installed along a third side wall perpendicular to the first side wall and the second side wall from among the side walls on the four edges; and a second side sheet is installed along a fourth side wall facing the third side wall, and the first side sheet and the second side sheet are disposed substantially perpendicular to the rear sheet.

8. The display apparatus of any one of claims 2 to 7, wherein the rear sheet comprises a plane surface parallel with the display panel.

9. The display apparatus of any one of the preceding claims, wherein the light source unit comprises a plurality of light emitting elements disposed along at least one edge from among the four edges of the cover and a lens extending parallel with a disposed direction of the light emitting elements and disposed in a radiating direction of the light emitting elements so that incident light from the light emitting elements is collected before exit from the lens.

10. The display apparatus of claim 9, wherein the lens comprises a collimator lens.

11. The display apparatus of any one of the preceding claims, further comprising an image receiver which receives an image signal and an image processor which processes the image signal received by the image receiver to display an image on the display panel.
